# EUROPEAN PATENT SPECIFICATION

(11) **EP 1 517 784 B1**
(45) Date of publication and mention of the grant of the patent: **13.12.2006**
(21) Application number: 03740717.8
(22) Date of filing: 10.06.2003
(51) Int. Cl.: B32B 13/12, B32B 3/24, E02D 31/00

(54) **METHOD OF PRODUCING A WATERPROOFING MATERIAL**
VERFAHREN ZUR HERSTELLUNG EINES WASSERDICHTENDEN MATERIALS
METHODE DE FABRICATION D'UN MATERIAU IMPERMEABILISANT

(30) Priority: 12.06.2002 GB 0213414
(43) Date of publication of application: 30.03.2005
(73) Proprietor: RAWELL GROUP HOLDINGS LIMITED, Wirral, Merseyside L47 4AZ (GB)
(72) Inventor: FLYNN, Bryan, Nicholas, Heswall Merseyside L6 2UV (GB); ROSTAMI, Shamsedean, Sandy Bedfordshire SG19 3DP (GB)
(74) Representative: Barker, Rosemary Anne
(86) International application number: PCT/GB2003/002493
(87) International publication number: WO 2003/106167

(56) References cited:
- WO-A-94/05863
- WO-A-97/36060
- US-E- R E37 295
- DATABASE WPI Section Ch, Week 199346 Derwent Publications Ltd., London, GB; Class A93, AN 1993-365885 XP002255338 & JP 05 272121 A (ASAHI CHEM IND CO LTD), 19 October 1993 (1993-10-19)

## Description

This invention concerns a method of producing a waterproofing material in sheet form comprising sandwiching a core layer, which incorporates swellable bentonite clay, between respective carrier layers.

Such material is used as a liner to retain water in artificial ponds, lakes, lagoons etc. It is also used for lining and for capping, i.e. covering, landfill waste deposit sites where the ground below has to be protected against leakage of contaminated liquid. It is used for a similar function and laid below petrol (gasolene) stations or comparable sites to prevent contamination of the water table by spillage of such material. It may also be used more generally as a waterproof layer below buildings and other structures and as a roofing material.

In one form, the core layer comprises bentonite clay in particulate or granular form and the carrier layers are joined by either stitching or needle punching through the clay layer. Material of this form is described in EP-A-0059625, EP-A-0246311 and GB2202185. Such material has to be wetted after installation so that the clay absorbs water before it becomes impermeable. If the material is damaged in transit or the in-situ wetting is uneven or insufficient the uniformity and reliability of the waterproofing layer may be suspect

WO 97/36060 discloses a similar material in which the core layer comprises bentonite particles and the carrier layers, one of which is permeable and one of which is of impermeable plastics material and formed with ridges at intervals, are heat sealed together along those ridges.

In another form, the core layer ofbentonite clay is already partially hydrated by being mixed with water, and variable optional dissolved substances, to form a plastic mass and then extruded or rolled to sheet form. Thus, the material is already waterproof before installation and the impermeability is uniform. Material of this form is described in the applicants' earlier WO 94/05863.

The latter type of material has the disadvantage of low shear strength. Because the carrier layers are not tied together, they can slide relative to each other, with the clay in the core layer acting as a lubricant. This precludes use of such material on sloping substrates where the angle of inclination is greater than about 6-8°. This precludes its use in many landfill situations.

An object of the invention is to overcome this disadvantage.

With this object in view, the invention provides a method of producing a waterproofing material as specified in the first paragraph, characterised in that the carrier layers are connected to each other by ultrasonic welding at intervals and/or along one or more lines.

This manner of joining the carrier layers is applicable to both forms of material described above, namely, those having particulate bentonite in the core layer as well as those having a clay-containing core layer formed from a plastic (deformable) mass.

Carrier layers of such materials are conventionally woven or non-woven textile fabrics, which are permeable, it being necessary to allow water to permeate into the core clay containing layer after the material is installed on site and covered to enable it to swell and provide a long term substantially impermeable layer. However, materials of this type, including the applicant's own 'Slabseal' product, are known wherein one of the carrier layers is an impermeable membrane of plastics material.

For purposes of the present invention, non-woven textile fabrics are preferred as carrier layers. These may suitably be of polypropylene fibre, although other materials, such as PVC, or polyethylene, or polyester fibre may be possible.

In certain embodiments a mesh reinforcement may be included in the core layer. One of the carrier layers can then be connected to the reinforcement by a first series of ultrasonic welds while the other of the carrier layers is connected to the reinforcement by a second series of ultrasonic welds, which are offset in position relative to the first series. This has the advantage that a certain thickness of the core waterproofing material is always present, i.e. there are no potentially permeable gaps.

The invention will be described further, by way of example, with reference to the accompanying drawings, in which;
Fig. 1 is a schematic perspective view showing how, in a first embodiment of the invention, a small section of material is welded along a line by ultrasonic means;
Fig. 2 is a similar view showing the material after welding;
Fig. 3 is a cross-section along line A-A in Fig. 2;
Fig. 4 is a schematic perspective view of a second embodiment of the material of the invention; and
Fig. 5 is a cross-section along line B-B in Fig. 4.

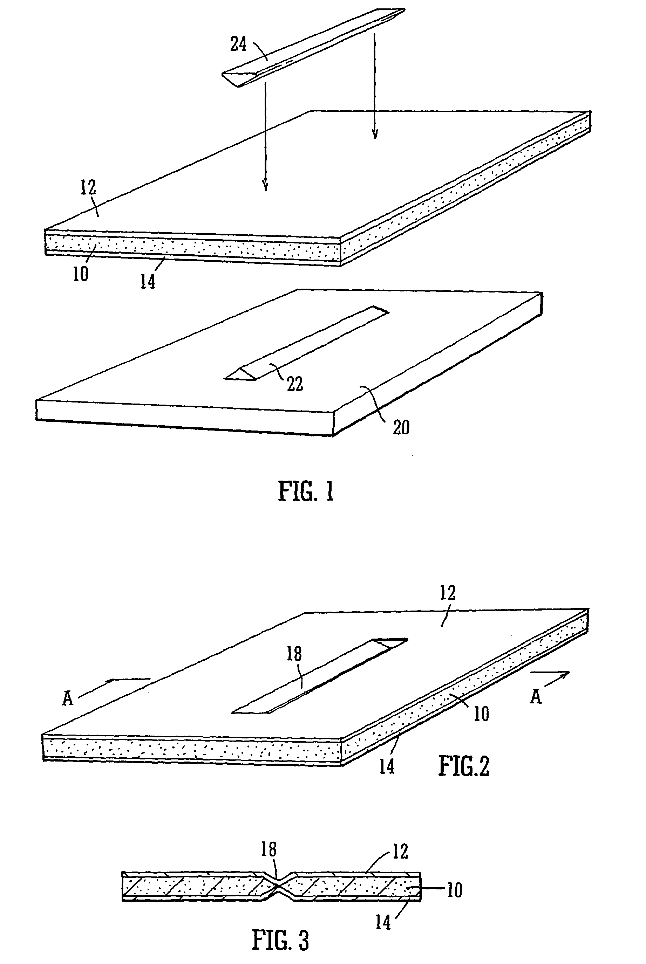

As illustrated in Figs. 1 to 3, the first exemplary embodiment comprises a core layer 10 of a semi-hydrated bentonite clay composition which has been rolled or extruded to sheet form and sandwiched between respective carrier layers 12, 14.

Preferably, both carrier layers 12,14 are of non-woven textile fabric, such as polypropylene. Use of non-woven material enables a stronger weld to be formed. However, it is possible to achieve a weld of reasonable strength using one non-woven carrier layer and one woven carrier layer. It may also be possible to use one carrier layer of impermeable film, the other of woven or non-woven textile.

In full scale production the material may be up to 5m wide. Only a small section is illustrated, and one means of ultrasonically welding the carrier layers thereof. With reference to Fig. 1, the material is placed over a base plate 20 on which there is a triangular cross section projection 22. A sonotrode 24 is brought into contact with the material over the projection, which serves to separate the material of the core layer 10. As the ultrasonic frequency is applied, the core layer is cut and the two fabrics 12, 14 are welded together.

The resultant weld line 18 is shown in Figs. 2 and 3.

Preliminary tests indicate that a plurality of spaced line welds, from a few cm apart to over 1m apart, where both carriers are of non-woven polypropylene fabric, will increase the sheer strength of the composite until it is comparable to commercially available material of the type where the core layer is particulate and the carrier layers are joined by stitching or needle-punching or any other means. This would enable the material to be used on any land slope up to about 60°.

Where some material of the clay containing core layer 10 remains between the carrier layers 12 and 14 at the weld line 18, the strength of the weld is reduced, by up to 50%, as measured by the force required to peel apart the layers 12 and 14.

An additional layer of an impermeable film, eg polypropylene or PVC, may be incorporated between either carrier layer 12, 14 and the core layer 10. This may in some cases improve the strength of the weld. However, its primary purpose is to control the permeability of the composite material and prevent the weld lines 18 from becoming permeable and breeching the overall integrity of the water impermeable barrier, which is to be formed by the composite.

In other embodiments, strips of impermeable film, as narrow as 5mm, may be provided at the locations of welding lines. These may be provided prior to welding, between the core layer 10 and either (or both) carrier layers 12,14. Alternatively, such strips may be laid in place, possibly adhered, on the outer surface of either carrier layer 12, 14 either before or after welding.

The weld lines, which may be about 15mm long, could also be filled in externally with addition bentonite containing deformable material, comparable to that in the core layer 10.

A plurality of spaced weld lines may suitably be provided either parallel or perpendicular to the width of the composite material. Thus it may take on the appearance of a duvet. However, other welding patterns may be suitable, such as point welds, or circular welds, distributed over the material, or continuous lines across the width, stopping short of the edge margins to allow for overlapping when the material is installed on site. A continuous zig-zag weld across the material could also be a possibility.

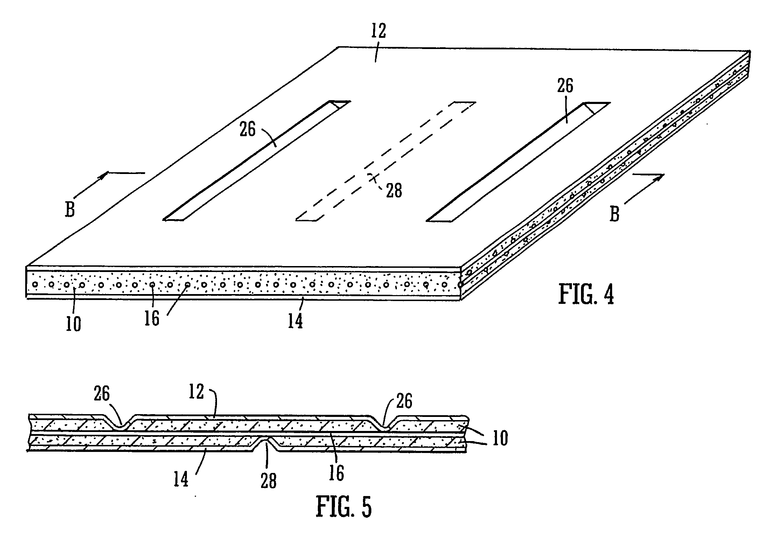

A further development is illustrated in Figs. 4 and 5. To improve the resistance of the material to relative slippage of the carrier layers, a flexible, perforate reinforcement means is incorporated into the core layer 10. In the illustrated example, a polypropylene mesh 16 is included in the core layer 10 intermediate he layers 12, 14 (same reference numbers as Figs. 1 to 3). This mesh 16 is welded by ultrasonics, to both the carrier layers 12, 14. As shown, the weld lines 26 joining the first carrier layer 12 to the mesh 16 are offset from the weld lines 28 joining the second carrier layer 14 to the mesh 16. This reduces the risk of permeability at the welds because there always remains a certain thickness of core material.

## Claims

1. A method of producing a waterproofing material in sheet form comprising sandwiching a core layer (10) incorporating swellable bentonite clay between respective carrier layers (12, 14) and connecting the carrier layers by ultrasonically welding (18; 26, 28) at intervals or along one or more lines.

2. A method according to claim 1 wherein a flexible perforate reinforcement (16) is included in the core layer.

3. A method according to claim 2 wherein the reinforcement is a mesh (16) of plastics material.

4. A method of producing a waterproofing material in sheet form comprising sandwiching a core layer (10) incorporating swellable bentonite clay between respective carrier layers (12, 14) and including a mesh reinforcement (16) within the core layer, connecting one of the carrier layers (12) to the reinforcement by ultrasonically welding at a first series of locations (26) and connecting the other of the carrier layers (14) to the reinforcement by ultrasonic welding at a second series of locations (28) which are offset relative to the first series.

5. A method according to any preceding claim wherein at least one of the carrier layers (12, 14) comprises a non-woven textile fabric.

6. A method according to any preceding claim wherein the carrier layers (12, 14) comprise polypropylene, polyethylene or polyvinylchloride.

7. A method according to any preceding claim including a further layer which is an impermeable film or membrane.

8. A method according to any of claims 1 to 6 wherein an impermeable film or membrane is provided at the locations of ultrasonic welding.

9. A method according to any preceding claim wherein the core layer (10) is formed by extrusion or rolling from a deformable plastics mass wherein the bentonite is semi-hydrated.

## Patentansprüche

1. Verfahren zur Herstellung eines wasserdichtenden Materials in Bahnform enthaltend ein Anordnen einer inneren Schicht (10), die quellfähigen Bentonitlehm enthält, zwischen jeweiligen Trägerschichten (12, 14) und ein Verbinden der Trägerschichten durch Ultraschall-Schweißen (18, 26, 28) in Abständen oder entlang einer oder mehrerer Linien.

2. Verfahren gemäß Anspruch 1, wobei eine flexible perforierte Verstärkung (16) in der inneren Schicht enthalten ist.

3. Verfahren gemäß Anspruch 2, wobei die Verstärkung ein Netz (16) aus Kunststoffmaterial ist.

4. Verfahren zur Herstellung eines wasserdichtenden Materials in Bahnform enthaltend ein Anordnen einer inneren Schicht (10), die quellfähigen Bentonitlehm enthält, zwischen jeweiligen Trägerschichten (12, 14) und enthaltend ein Verstärkungsnetz (16) innerhalb der inneren Schicht (10), ein Verbinden einer der Trägerschichten (12) mit der Verstärkung durch Ultraschall-Schweißen an einer erster Reihe von Orten (26) und ein Verbinden der anderen der Trägerschichten (14) mit der Verstärkung durch Ultraschall-Schweißen an einer zweiten Reiche von Orten (28), die relativ zu den ersten Orten versetzt sind.

5. Verfahren nach einem der voranstehenden Ansprüche, wobei mindestens eine der Trägerschichten (12, 14) nicht-gewebte textile Fasern enthält.

6. Verfahren nach einem der voranstehenden Ansprüche, wobei die Trägerschichten (12, 14) Polypropylen, Polyethylen oder Polyvinylchlorid enthalten.

7. Verfahren nach einem der voranstehenden Ansprüche weiterhin enthaltend eine Schicht, die eine undurchlässige Haut oder Membran ist.

8. Verfahren nach einem der voranstehenden Ansprüche 1 bis 6, wobei eine undurchlässige Haut oder Membran an den Orten des Ultraschall-Schweißens bereitgestellt ist.

9. Verfahren nach einem der voranstehenden Ansprüche, wobei die innere Schicht (10) durch Extrudieren oder Walzen einer verformbaren Plastmasse gebildet wird, worin das Bentonit teilweise hydratisiert ist.

## Revendications

1. Procédé de fabrication d'un matériau imperméabilisant sous la forme de feuille comprenant la mise en sandwich d'une couche noyau (10) incorporant de l'argile de bentonite gonflable entre des couches support respectives (12, 14) et la connexion des couches support par soudure ultrasonique (18 ; 26, 28) à intervalle ou le long d'une ou plusieurs ligne(s).

2. Procédé selon la revendication 1, dans lequel un renforcement perforé flexible (16) est inclus dans la couche noyau.

3. Procédé selon la revendication 2, dans lequel le renforcement est un maillage (16) de matériau plastique.

4. Procédé de fabrication d'un matériau imperméabilisant sous la forme de feuille comprenant la mise en sandwich d'une couche noyau (10) incorporant de l'argile de bentonite gonflable entre des couches support respectives (12, 14) et incluant un maillage de renforcement (16) au sein de la couche noyau, la connexion d'une des couches support (12) au renforcement par soudure ultrasonique à une première série d'emplacements (26) et la connexion de l'autre des couches support (14) au renforcement par soudure ultrasonique à une seconde série d'emplacements (28) qui sont décalés par rapport à la première série.

5. Procédé selon l'une quelconque des revendications précédentes, dans lequel au moins une des couches support (12, 14) comprend un tissu textile non tissé.

6. Procédé selon l'une quelconque des revendications précédentes, dans lequel les couches support (12, 14) comprennent du polypropylène, du polyéthylène ou du chlorure de polyvinyle.

7. Procédé selon l'une quelconque des revendications précédentes, incluant une couche supplémentaire qui est un film ou une membrane imperméable.

8. Procédé selon l'une quelconque des revendications 1 à 6, dans lequel un film ou une membrane imperméable est prévu(e) aux endroits de soudure ultrasonique.

9. Procédé selon l'une quelconque des revendications précédentes, dans lequel la couche noyau (10) est formée par extrusion ou laminage d'une masse de plastique déformable dans laquelle la bentonite est semi-hydratée.
